# EUROPÄISCHE PATENTSCHRIFT

(11) **EP 1 268 661 B1**
(45) Veröffentlichungstag und Bekanntmachung des Hinweises auf die Patenterteilung: **05.08.2009**
(21) Anmeldenummer: 01915287.5
(22) Anmeldetag: 22.02.2001
(51) Int. Cl.: C08L 45/00, C08L 65/00, C08F 232/08, B32B 27/32, B65D 65/40

(54) **POLYMERGEMISCH ENTHALTEND EIN CYCLOOLEFINPOLYMER UND EIN AMORPHES CYCLOOLEFINPOLYMER**
POLYMER BLEND CONTAINING A CYCLOOLEFIN-POLYMER AND AN AMORPHOUS CYCLOOLEFIN-POLYMER
MELANGE DE POLYMERES CONTENANT UN POLYMERE CYCLOOLEFINIQUE ET UN POLYMERE CYCLOOLEFINIQUE AMORPHE

(30) Priorität: 01.03.2000 DE 10009646
(43) Veröffentlichungstag der Anmeldung: 02.01.2003
(73) Patentinhaber: Topas Advanced Polymers GmbH, 65926 Frankfurt am Main (DE)
(72) Erfinder: BERGER, Klaus, 65843 Sulzbach (DE); GOERLITZ, Wolfram, 65193 Wiesbaden (DE); HATKE, Wilfried, 65779 Kelkheim (DE)
(74) Vertreter: Ackermann, Joachim
(86) Internationale Anmeldenummer: PCT/EP2001/002012
(87) Internationale Veröffentlichungsnummer: WO 2001/064786

(56) Entgegenhaltungen:
- EP-A- 0 485 893
- EP-A- 0 744 285
- EP-A- 0 816 068
- EP-A- 0 964 005
- WO-A-96/37528
- DE-A- 19 633 641
- US-A- 6 027 677
- PATENT ABSTRACTS OF JAPAN vol. 015, no. 293 (C-0853), 25. Juli 1991 (1991-07-25) & JP 03 106962 A (JAPAN SYNTHETIC RUBBER CO LTD), 7. Mai 1991 (1991-05-07)
- PATENT ABSTRACTS OF JAPAN vol. 017, no. 361 (C-1080), 8. Juli 1993 (1993-07-08) & JP 05 051512 A (MITSUI PETROCHEM IND LTD), 2. März 1993 (1993-03-02)

## Beschreibung

Die vorliegende Erfindung betrifft eine neue transparente Polymermischung mit verändertem Relaxations- und Schrumpfverhalten enthaltend Cycloolefinpolymere.

Das Relaxationsverhalten von Polymeren beschreibt die Veränderung des Elastizitätsmoduls als Funktion von Temperatur und Frequenz. Das Relaxationsverhalten eines Cycloolefinpolymers oder bekannten Cycloolefingemisches zeigt einen steilen Abfall des Elastizitätsmoduls innerhalb eines engen Temperaturbereiches, dem sogenannten Glasumwandlungs- oder Erweichungsbereich.

Das Schrumpfverhalten beschreibt die Längenänderung mono- oder biaxial orientierter Probekörper als Funktion von Temperatur oder Zeit.

In Delfolie et al, Makromolecules 32, 1999, 7781 - 7789, wird die Mischbarkeit von Ethylen-Norbomen-Copolymeren untersucht. Die Grenzen der Mischbarkeit werden mittels DSC aufgezeigt: Das Auftreten einer einzelnen Glasumwandlungstemperatur wird als maß für Mischbarkeit angesehen, während die Unmischbarkeit sich im Auftreten zweier separierter Glasstufen äußert.

In Utracki, Polymer Alloys and Blends-Thermodynamcs and Rheology, 2nd edition, Munich, Hanser 1989, 3ff, wird allgemein der Elastizitätsmodulus als Funktion der Temperatur für 50/50 Polymermischungen in der Nähe der Glasumwandlungstemperatur beschrieben. Für homogen mischbare Polymere wird ein steiler Abfall des Modulus bei einer mittleren Glasumwandlungstemperatur beobachtet. Für unmischbare Polymere werden zwei Sprünge im Elastizitätsmodul und somit zwei Glasumwandlungstemperaturen beobachtet, die denen der Ausgangsstoffe entsprechen. Für teilweise mischbare Polymere werden zwei Sprünge im Elastizitätsmodul und somit zwei Glasumwandlungstemperaturen beobachtet, die von denen der Ausgangsstoffe leicht abweichen. Für unmischbare Polymere mit feiner Disperson unter 15 nm sog. verträgliche Polymere wird ein breites Gebiet der Glasumwandlungstemperatur mit einem leichten Abfall des Elastizitätsmodulus beobachtet.

In Hsiue und Ye, J. Appl. Pol. Sci. 37, 1989, 2803 - 2836, wird das Schrumpfverhalten von verstreckten Polyesterfolien oberhalb der Glastemperatur beschrieben. Es wird aufgezeigt, daß das Schrumpfverhalten amorpher Polymere in diesem Bereich durch die Verschlaufung der Polymerketten bestimmt wird. Eine Erhöhung des Molekulargewichtes und eine Absenkung der Verstreckungstemperatur führen zu einem stärkeren Schrumpfen.

In US-A-5,824,398 und US-A-5,589,126 wird aufgezeigt, daß durch Zugabe eines Weichmachers zu Polyester die Temperatur des Schrumpfbeginns orientierter Folien zu tieferen Temperaturen verschoben wird.

Ein wesentlicher Nachteil des steilen Abfalles des Elastizitätsmoduls mit der Temperatur ist, daß die Dehnung von Probekörpern nur in einem engen Temperaturbereich möglich ist. Das ist beispielsweise relevant beim mono- oder biaxialen Verstrecken von Folien. Der steile Abfalls des Elastizitätsmoduls als Funktion der Temperatur bewirkt darüber hinaus eine schnell Änderung des Schrumpfes von verstreckten Folien mit der Temperatur. Dadurch können hergestellte Folien nur unzureichend auf ungleichmäßig geformte Probekörper aufgeschrumpft werden. Die starke Längenänderung orientierter Probekörper mit der Temperatur übt zusammen mit einem hohen Verschlaufungsgrad der Polymerketten eine starke Schrumpfkraft auf dem Probekörper aus, was bei einer geringen Wandstärke zu einer unerwünschten Volumenänderung führen kann. Daher bestand seit langem die Bestrebung, einen Weg zu finden, um die Temperaturabhängigkeit des Elastizitätsmoduls im Glasübergangsbereich und des Schrumpfes unter gleichzeitiger Wahrung der Transparenz zu beeinflussen.

Weiterhin bekannt sind eine Vielzahl von Cycloolefincopolymeren und Mischungen enthaltend solche Polymere, wie sie z.B. in DE19633641A1, WO96/37528, JP03106962, JP05051512, EP0964005A1 und EP0485893A1 beschrieben sind. Auch die Verwendung solcher Polymere in Verpackungsfolien ist z.B. aus EP0744285A1, EP0816068A1 und US6027677 bekannt.

Die Aufgabe der vorliegenden Erfindung liegt darin, eine neue transparente Polymermischung, enthaltend Cycloolefinpolymere, mit verändertem Relaxations- und Schrumpfverhalten bereitzustellen.

Die Aufgabe der vorliegenden Erfindung wird gelöst durch ein Polymergemisch gemäß Anspruch 1. Das erfindungsgemäße Gemisch enthält bevorzugt mindestens ein Cycloolefinpolymer und mindestens ein amorphes Cycloolefinpolymer. Die Zugabe mindestens eines amorphen Cycloolefinpolymer zu einem Cycloolefinpolymer bewirkt besonders gute Ergebnisse bei der Änderung des Elastizitätsmoduls und des Schrumpfverhaltens mit der Temperatur.

Das erfindungsgemäße Gemisch gemäß Anspruch 1 enthält Cycloolefinpolymere, enthaltend 0,1 Gew.-% bis 100 Gew.-%, bevorzugt 0,1 Gew.-% bis 99,9 Gew.-%, bezogen auf die Gesamtmasse des Cycloolefncopolymers, polymerisierte Einheiten, welche sich ableiten von mindestens einem polycyclischen Olefin der Formeln I, I, II', III, IV, V oder VI 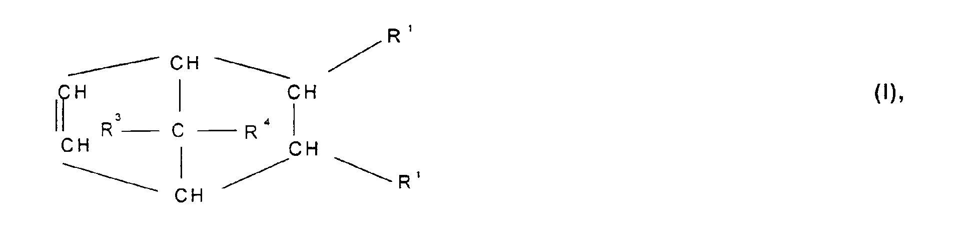 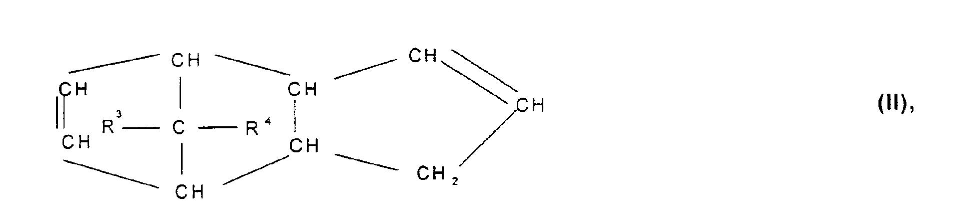 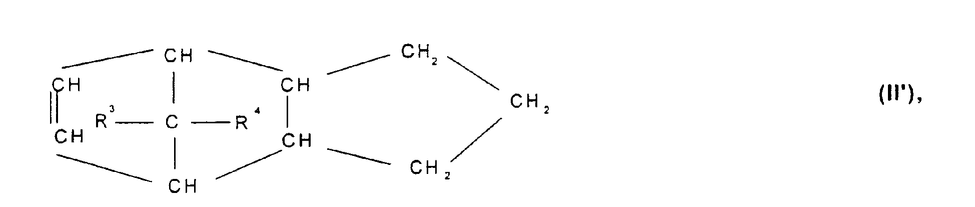 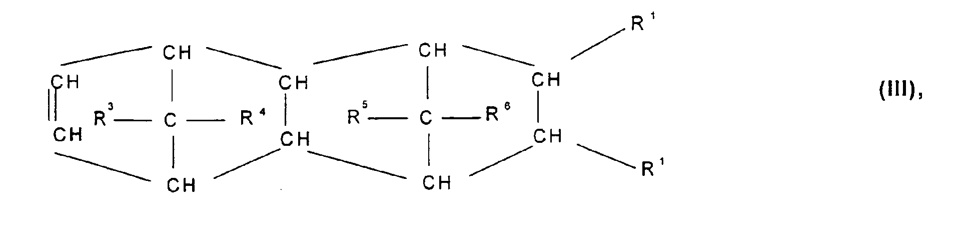 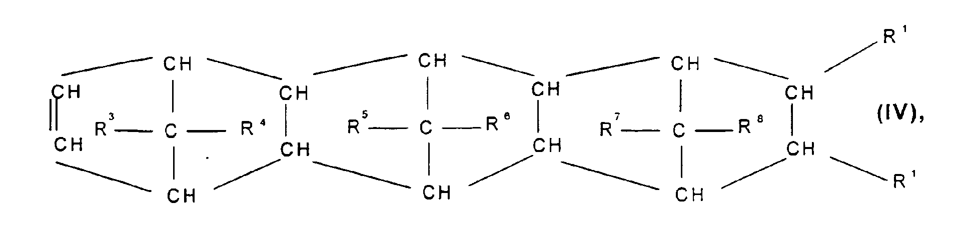 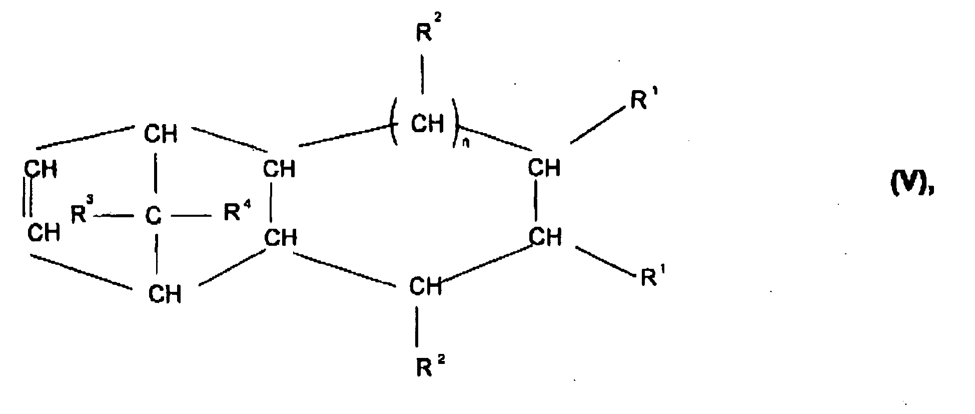 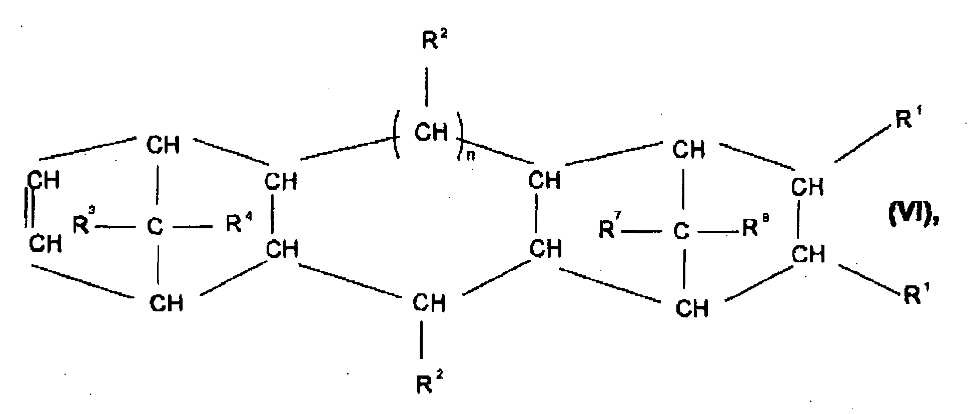 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII 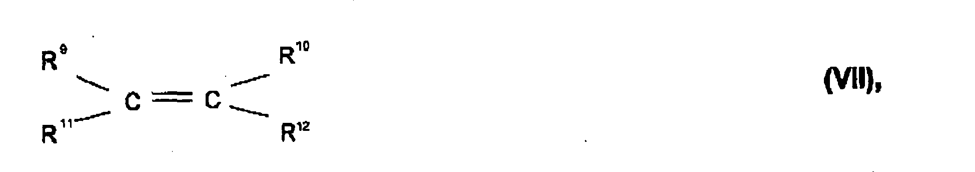 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₆-Arylrest bedeuten, wobei die im Polymergemisch enthaltenen Cycloolefinpolymere eine Glasumwandlungstemperatur zwischen -50 und 250 °C aufweisen, und wobei nach Zugabe des amorphen Cycloolefinpolymers zum Cycloolefinpolymer im Glasübergangsbereich, bestimmbar mit DSC-Messung (DIN EN ISO 11357-1), ein leichterer Abfall des Elastizitätsmoduls mit der Temperatur, bestimmbar mit einem Torsionspendel bei einer Frequenz von 5 Hz und einer Heizrate von 5°C/min an Probenkörpern der Abmessungen 50*10*1 mm, gegenüber dem Cycloolefinpolymer erzielt wird.

Außerdem können die erfindungsgemäß verwendeten Cycloolefincopolymere 0 bis 45 Gew.-%, bezogen auf die Gesamtmasse des Cycloolefincopolymers, polymerisierte Einheiten enthalten, welche sich ableiten von einem oder mehreren 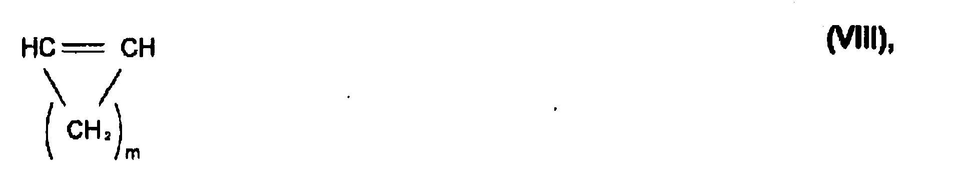 monocyclischen Olefinen der Formel VIII
worin m eine Zahl von 2 bis 10 ist.

Bei den cyclischen Olefinen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen, eingeschlossen.

Bevorzugt im Sinne der Erfindung sind Cycloolefincopolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefincopolymere, die polymerisierte Einheiten enthalten, welche sich ableiten von Olefinen mit Norbornengrundstruktur, ganz besonders bevorzugt von Norbornen und Tetracyclododecen und gegebenenfalls Vinylnorbornen oder Norbornadien.

Besonders bevorzugt sind auch Cycloolefincopolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylen- und Tetracyclododecen/ Ethylen-Copolymere.

Bei den Terpolymeren sind besonders bevorzugt Norbornen/Vinylnorbonen/ Ethylen-, Norbornen/Norbornadien/Ethylen-, Tetracyclododecen/Vinylnorbornen/ Ethylen-, Tetracyclododecen/Vinyltetracyclododecen/Ethylen-Terpolymere oder Norbornen/Dicyclopentadien/Ethylen. Der Anteil der polymerisierten Einheiten, die sich ableiten von einem Polyen, bevorzugt Vinylnorbornen oder Norbornadien, liegt bei 0,1 bis 50 mol-%, vorzugsweise bei 0,1 bis 20 mol-%, der Anteil des acyclischen Monoolefins der Formel VII beträgt 0 bis 99,9 mol-%, bevorzugt 5 bis 80 mol-%, bezogen auf die Gesamtzusammensetzung des Cycloolefinpolymers. In den beschriebenen Terpolymeren liegt der Anteil des polycyclischen Monoolefins bei 0,1 bis 99,9 mol-%, bevorzugt 3 bis 75 mol-%, bezogen auf die Gesamtzusammensetzung des Cycloolefinpolymers.

Weitere geeignete Polymere werden in EP-A-317262 beschrieben. Hydrierte Polymere und Copolymere, wie von Styrol oder Dicyclopentadien und anderen amorphen Polyolefinen sind ausdrücklich ebenfalls geeignet.

Abmischungen dieser Polymere mit typischen Kunststoffadditiven wie Antioxidantien, Metalldesaktivatoren, Lichtschutzmitteln, Weichmachern, Gleitmitteln, Verarbeitungshilfsmitteln, Antistatika, Optische Aufheller, Biostabilisatoren Brandschutzmittel, Pigmente, Farbstoffe sowie Füll- und Verstärkungsmittel (siehe auch Gächter, Müller, Plastics Additive Handbook, 4th edition, 1993, München, Hanser) sind ausdrücklich ebenfalls geeignet.

Die erfindungsgemäß verwendeten Cycloolefincopolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefincopolymere geeignet sind, sind beschrieben in US-A-5,008,356, EP-A-0 407 870, EP-A-0 485 893 und EP-A-0 503 422. Auf diese Referenzen wird hiermit ausdrücklich Bezug genommen. Die Offenbarung dieser Referenzen ist somit Bestandteil der vorliegenden Patentanmeldung.

Beispiele für eingesetzte Übergangsmetallverbindungen sind: rac-Dimethylsilyl-bis-(1-indenyl)-zirkondichlorid, rac-Dimethylgermyl-bis-(1-indenyl)-zirkondichlorid, rac-Phenylmethylsilyl-bis-(1-indenyl)-zirkondichlorid, rac-Phenylvinylsilyl-bis-(1-indenyl)-zirkondichlorid, 1-Silacyclobutyl-bis-(1-indenyl)-zirkondichlorid, rac-Diphenylsilyl-bis-(1-indenyl)-hafniumdichlorid, rac-Phenylmethylsilyl-bis-(1-indenyl)-hafniumdichlorid, rac-Diphenylsilyl-bis-(1-indenyl)-zirkondichlorid, rac-Ethylen-1,2-bis-(1-indenyl)-zirkondichlorid, Dimethylsilyl-(9-fluorenyl)-(cyclopentadienyl)-zirkondichlorid, Diphenylsilyl-(9-fluorenyl)-(cyclopentadienyl)-zirkondichlorid, Bis(1-indenyl)-zirkondichlorid, Diphenylmethylen-(9-fluorenyl)-cyclopentadienylzirkondichlorid, Isopropylen-(9-fluorenyl)-cyclopentadienyl-zirkondichlorid, rac-Isopropyliden-bis-(1-indenyl)zirkondichlorid, Phenylmethylmethylen-(9-fluorenyl)-cyclopentadienyl-zirkondichlorid, Isopropylen-(9-fluorenyl)-(1-(3-isopropyl)cyclopentadienyl)-zirkondichlorid, Isopropylen-(9-fluorenyl)(1-(3-methyl)cyclopentadienyl)-zirkondichlorid, Diphenylmethylen-(9-fluorenyl)(1-(3-methyl)cyclopentadienyl)-zirkondichlorid, Methylphenylmethylen-(9-fluorenyl)(1-(3-methyl)cyclopentadienyl)-zirkondichlorid, Dimethylsilyl-(9-fluorenyl)(1-(3-methyl)-cyclopentadienyl)-zirkondichlorid, Diphenylsilyl-(9-fluorenyl)(1-(3-methyl)cyclopentadienyl)-zirkondichlorid, Diphenylmethylen-(9-fluorenyl)(1-(3-tert.-butyl)cyclopentadienyl)-zirkondichlorid, Isopropylen-(9-fluorenyl)(1-(3-tert.-butyl)cyclopentadienyl)-zirkondichlorid, Isopropylen-(cyclopentadienyl)-(1-indenyl)-zirkondichlorid, Diphenylcarbyl-(cyclopentadienyl)-(1-indenyl)-zirkondichlorid, Dimethylsilyl-(cyclopentadienyl)-(1-indenyl)-zirkondichlorid, Isopropylen-(methylcyclopentadienyl)-(1-indenyl)-zirkondichlorid, 4-(η⁵-cyclopentadienyl)-4,7,7-trimethyl-(η⁵-4,5,6,7-tetrahydroindenyl-zirkondichlorid, [4-(η⁵-cyclopentadienyl)-4,7,7-triphenyl-(η⁵-4,5,6,7-tetrahydroindenyl)]zirkondichlorid, [4-(η⁵-cyclopentadienyl)-4,7-dimethyl-7-phenyl-(η⁵-4,5,6,7-tetrahydroindenyl)]zirkondichlorid, [4-(η⁵-3'-tert.-butylcyclopentadienyl)-4,7,7-triphenyl-(η⁵-4,5,6,7-tetrahydroindenyl)]zirkondichlorid, [4-(η⁵-3'-tert.-butylcyclopentadienyl)-4,7-dimethyl-7-phenyl-(η⁵-4,5,6,7-tetrahydroindenyl)]zirkondichlorid, [4-(η⁵-3'-methylcyclopentadienyl)-4,7,7-trimethyl-(η⁵-4,5,6,7-tetrahydroindenyl)]zirkondichlorid, [4-(η⁵-3'-methylcyclopentadienyl)-4,7,7-triphenyl-(η⁵-4,5,6,7-tetrahydroindenyl)]zirkondichlorid, [4-(η⁵-3'-methylcyclopentadienyl)-4,7-dimethyl-7-phenyl-(η⁵-4,5,6,7-tetrahydroindenyl)]zirkondichlorid, [4-(η⁵-3'-isopropylcyclopentadienyl)-4,7,7-trimethyl-(η⁵-4,5,6,7-tetrahydroindenyl)]zirkondichlorid, [4-(η⁵-3'-isoproplycyclopentadienyl)-4,7,7-triphenyl-(η⁵-4,5,6,7-tetrahydroindenyl)]zirkondichlorid, [4-(η⁵-3'-isopropylcyclopentadienyl)-4,7-dimethyl-7-phenyl-(η⁵-4,5,6,7-tetrahydroindenyl)]zirkondichlorid, [4-(η⁵-cyclopentadienyl)(η⁵-4,5-tetrahydropentalen)]zirkondichlorid, [4-(η⁵-cyclopentadienyl)-4-methyl-(η⁵-4,5-tetrahydropentalen)]zirkondichlorid, [4-(η⁵-cyclopentadienyl)-4-phenyl-(η⁵-4,5-tetrahydropentalen)]zirkondichlorid, [4-(η⁵-cyclopentadienyl)-4-phenyl-(η⁵-4,5-tetrahydropentalen)]zirkondichlorid, [4-(η⁵-3'-methyl-cyclopentadienyl)(η⁵-4,5-tetrahydropentalen)]zirkondichlorid, [4-(η⁵-3'-isopropylcyclopentadienyl)(η⁵-4,5-tetrahydropentalen)]zirkondichlorid, [4-(η⁵-3'-benzyl-cyclopentadienyl)(η⁵-4,5-tetrahydropentalen)]zirkondichlorid, [2,2,4Trimethyl-4-(η⁵-cyclopentadienyl)-(η⁵-4,5-tetrahydropentalen)]-zirkoniumdichlorid, [2,2,4Trimethyl-4-(η⁵-(3,4-Di-isopropyl)cyclopentadienyl)-(η⁵-4,5-tetrahydropentalen)]-zirkoniumdichlorid.

Die Herstellung der Cycloolefincopolymere kann auch auf anderen, nachfolgend kurz skizzierten Wegen erfolgen: Katalysatorsysteme basierend auf Mischkatalysatoren aus Titansalzen und Aluminiumorganylen werden in DD-A-109 224 und DD-A-237 070 beschrieben. EP-A-0 156 464 beschreibt die Herstellung mit Katalysatoren auf Vanadiumbasis.

Die Cycloolefincopolymere können auch durch ringöffnende Polymerisation mindestens eines der Monomere mit den Formeln I bis VI und anschließender Hydrierung der erhaltenen Produkte hergestellt werden.

Die Polymerisation kann auch mehrstufig erfolgen; wobei auch Blockcopolymere entstehen können (DE-A-42 05 416).

Cycloolefincopolymere sind bevorzugt amorphe, transparente Werkstoffe. Die Wärmeformbeständigkeiten der Cycloolefincopolymere lassen sich in einem weiten Bereich einstellen. Als Anhaltspunkt für die Wärmeformbeständigkeit, wie sie nach ISO 75 Teil 1 und Teil 2 an Spritzgußformkörpem bestimmt werden kann, läßt sich für Cycloolefincopolymere die Glasübergangstemperatur heranziehen, gemessen nach DIN EN ISO 11357-1 mit Hilfe einer DSC. Die beschriebenen Cycloolefincopolymere weisen Glasübergangstemperaturen zwischen -50 und 250 °C auf. Bevorzugt sind Glasübergangstemperaturen zwischen 0 und 220 °C, besonders bevorzugt sind Glasübergangstemperaturen zwischen 40 und 200 °C.

Die mittlere Molmasse der Cycloolefincopolymere läßt sich durch Wasserstoff-Dosierung, Variation der Katalysatorkonzentration oder Variation der Temperatur in bekannter Weise steuern. Die in den erfindungsgemäßen mikrostrukturierten Bauteilen enthaltenen Cycloolefincopolymere weisen massenmittlere Molmassen Mw zwischen 1.000 und 10.000.000 g/mol auf. Bevorzugt sind massenmittlere Molmassen Mw zwischen 5.000 und 5.000.000 g/mol, besonders bevorzugt sind massenmittlere Molmassen Mw zwischen 5.000 und 1.200.000 g/mol. Diese mit Hilfe der Gelpermeationschromatographie (GPC) in Chloroform bei 35°C mit Hilfe eines RI Detektors bestimmten Molmassen sind relativ und beziehen sich auf eine Eichung mit engverteilten Polystyrolstandards.

Die hier beschriebenen Cycloolefincopolymere weisen gemäß DIN 53 728 Viskositätszahlen zwischen 5 und 5.000 ml/g auf. Bevorzugt sind Viskositätszahlen zwischen 5 und 2000 ml/g, besonders bevorzugt sind Viskositätszahlen zwischen 5 und 1000 ml/g.

Die optischen Eigenschaften der Polymermischungen wurden an 1 mm dicken Preßplatten mit dem Auge qualitativ beurteilt.

Die erfindungsgemäßen, transparente Polymermischung, enthaltend Cycloolefinpolymere, mit verändertem Relaxations- und Schrumpfverhalten können besonders für folgende Produkte eingesetzt werden. Mono- oder biaxial orientierte Folien mit geändertem Schrumpfverhalten. Produkte, bei denen durch erfindungsgemäßen Abmischungen ein zu den Ausgangsprodukten geänderte Wärmeformbeständigkeit erreicht wurde. Blisterverpackungen , bei denen durch die erfindungsgemäßen Abmischungen ein verändertes Thermoformbarkeit erreicht wurde. Mischungen mit anderen Kunststoffen, besonders Polyolefine bei denen durch die erfindungsgemäßen Abmischungen ein verändertes Relaxationverhalten, Schrumpfverhalten oder eine veränderte Wärmeformbeständigkeit erzielt wurde. Durch Mono- oder biaxial orientierte Folien, bei denen durch die erfindungsgemäßen Abmischungen ein breites Arbeitsfenster beim Verstrecken ermöglicht wird. Durch Spritzblasen hergestellte Probekörper wie Fläschchen, bei denen durch die erfindungsgemäße Abmischungen ein breites Arbeitsfenster beim Aufblasen ermöglicht wird. Durch Blasextrusion hergestellte Filme, bei denen, durch die erfindungsgemäßen Abmischungen, ein breites Arbeitsfenster ermöglicht wird.

Die Erfindung wird nun anhand von Beispielen und Diagrammen näher erklärt.

### Beispiel 1

500 g eines Norbornen-Ethylen Copolymer Granulates mit einer Glastemperatur von 69 °C, einer VZ von 90 ml/g und M_{w} = 120000 g/mol (Handelsname Topas® 8006, Ticona GmbH, Frankfurt) wurden mit 500 g eines Norbornen-Ethylen Copolymer Granulates mit einer Glastemperatur von 145 °C, einer VZ von 65 mllg und M_{w} = 70000 g/mol (Handelsname Topas® 6013, Ticona GmbH, Frankfurt) auf einem Rollstand homogenisiert. Das homogenisierte Gemisch wurde auf eine Spritzgußmaschine gegeben und bei einer Schmelzetemperatur von 250 °C Probekörper hergestellt. Die Probekörper waren transparent.

An den Probekörpern wurden Glastemperaturen bestimmt, gemessen nach DIN EN ISO 11357-1 mit Hilfe einer DSC (TAInst 2920), bei einer Heizrate von 20 K/min in der zweiten Heizkurve. Die Glastemperatur (Tg) betrug 87 °C und der Temperaturunterschied zwischen Beginn und Mittelpunkt (Tg-Breite) 8,3 °C.

Das Elastizitätsmodul und Tangenz Delta als Funktion der Temperatur wurden mit einem Torsionspendel bei einer Frequenz von 5 Hz und einer Heizrate von 5/min an Probeköpern der Abmessungen 50*10*1 mm bestimmt. Das Maximum von Tangenz Delta (tan d max) wurde bei 97 °C beobachtet.

Aus den Probekörpern wurden mittels einer Presse Folien mit einer Dicke von 1 mm hergestellt. Daraus wurden Proben von 20 mm x 20 mm zugeschnitten. Diese Folien wurden mittels eines Zug-Dehnungs Meßgeräts (Instron) mit einer Zuggeschwindigkeit von 500 mm/min bei 125 °C auf die fünffache Länge gedehnt und unter Zugspannung abgekühlt. Anschließend wurde das Längenänderung dieser verstreckten Folien als Funktion der Temperatur bestimmt. Bis zu einer Temperatur unter 90°C wurden die verstreckten Folien für 30 s im Wasserbad gelagert, oberhalb von 90 °C erfolgte die Lagerung für 180 s im

Umlufttrockenschrank auf Sand. Der Schrumpf ist die Längenänderung vor und nach der Warmlagerung geteilt durch die Ausgangslänge.

In der folgenden Tabelle sind weitere Beispiele und Vergleichsbeispiele zusammengefaßt:

| | **Bsp.2** | **V-Bsp.1** | **V-Bsp.2** | **V-Bsp.3** | **V-Bsp 4** |
|---|---|---|---|---|---|
| Komponente 1 | 8006 | 8006 | 8006 | 8006 | 8006 |
| Anteil / % | 75 | 100 | 50 | 75 | 75 |
| Komponente 2 | 6013 | - | Zeonor 1060 | Kraton G 1560 | Topas TM |
| Anteil / % | 25 | 0 | 50 | 25 | 25 |
| Herstellung | Spritzguß | Spritzguß | Spritzguß | Extrusion | Extrusion |
| Transparenz | transparent | transparent | trüb | opak | transparent |
| Tg / °C | 80 | 69 | 70/102 | 68 | 67 |
| Tg-Breite / °C | 6,8 | 4,7 | 5,9 | 6,3 | 7,4 |
| Tan d max / °C | 86 | 73 | 70/102 | 71 | 71 |
| Verstreck T / °C | 110 | 90 | Nicht möglich | 90 | 90 |

| | | | | | |
|---|---|---|---|---|---|
| Zeonor 1060 ist ein amorphes Cycloolefinpolymer von Nippon Zeon Co. Ltd. (Japan) mit einer Glasumwandlungstemperatur von 106 °C. Kraton G 1650 ist ein thermoplastisches lineares S-E/B-S Elastomer der Deutsche Shell Chemie GmbH, Eschborn. Topas TM ist ein Norbornen-Ethylen Copolymer mit einer Glastemperatur von 65 °C, einer VZ von 15 ml/g und M_{w} = 10000 g/ mol der Ticona GmbH, Frankfurt. | | | | | |

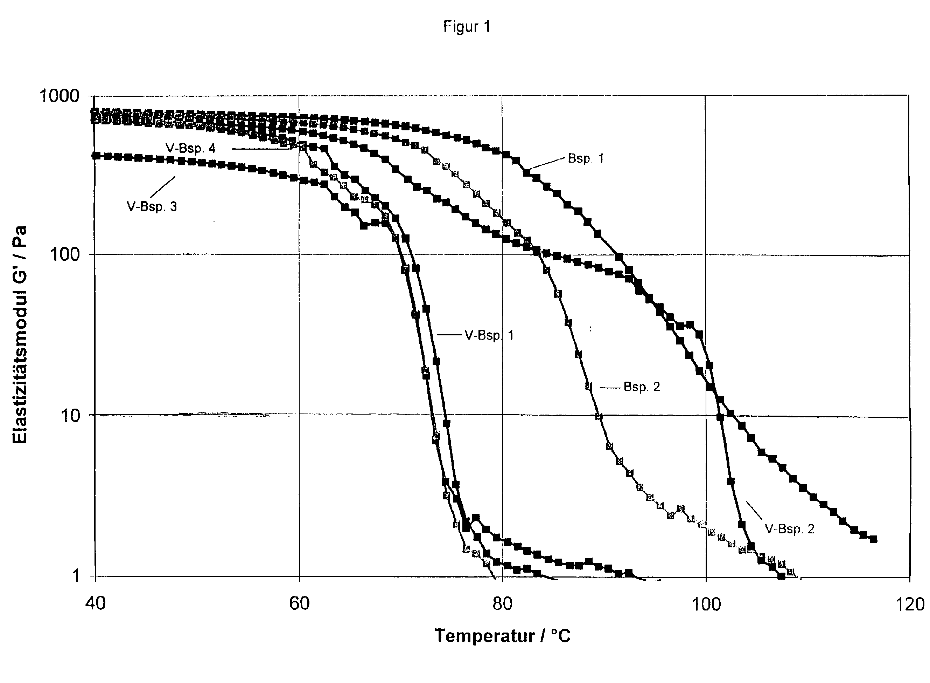

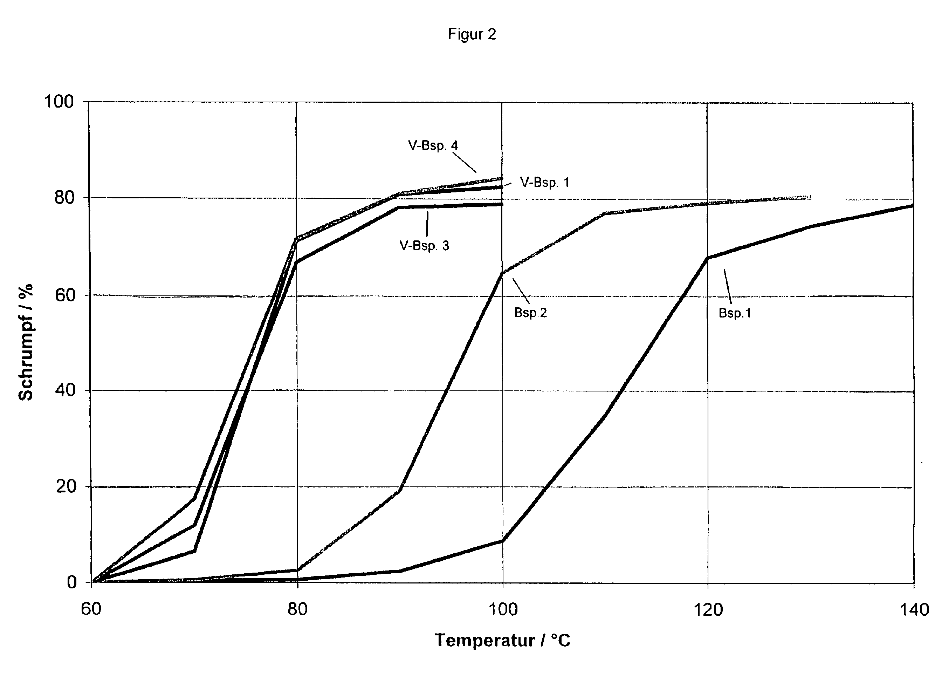

Die vorliegende Erfindung wird anhand der Figuren 1 und 2 näher erläutert. Figur 1 zeigt die Elastizitätsmoduli der Bespiele und Vergleichsbeispiele als Funktion der Temperatur.

Figur 2 zeigt den Schrumpf der Bespiele und Vergleichsbeispiele als Funktion der Temperatur.

Beispiele 1 und 2 zeigen das gewünschte veränderte Relaxations- und Schrumpfverhalten unter Wahrung der Transparenz.

Vergleichsbeispiel 1 zeigt das bekannte Relaxations- und Schrumpfverhalten amorpher Polyolefine.

Vergleichsbeispiel 2 ist ein trübes Produkt, welches zwei separate Glasumwandlungstemperaturen aufweist. Die beiden Stoffe sind also nicht homogen mischbar. Ein Verstrecken war bei keiner Temperatur möglich.

Vergleichsbeispiel 3 ist eine opake Polymermischung, welche das bekannte Relaxations- und Schrumpfverhalten amorpher Polyolefine zeigt.

Vergleichsbeispiel 4 ist eine transparente Mischung amorpher Polyolefine, welche das bekannte Relaxations- und Schrumpfverhalten amorpher Polyolefine zeigt.

Weiterhin können Weichmacher, wie Phthalsäureester, Phosphorsäureester, Ester der Adipin-, Azelanin- und Sebacinsäure, Fettsäureester, Epoxidierte Fettsäureester, Zitronensäureester niedermolekulare Polyester, und Chlorierte Kohlenwasserstoffe, zugesetzt werden, um die Glasumwandlungstemperatur und somit den Abfall des Elastizitätsmoduls und den Schrumpfbeginn zu tieferen Temperaturen zu verschieben. Ausdrücklich besonders geeignet sind hochsiedende medizinische Weißöle wie Ondina 9xx (Deutsche Shell), Cobersol (Cölner Benzin Rafinerie) und Enerpar (BP Schmierstoffe), welche selbst eine geringe Eigenfärbung aufweisen und mit amorphen Polyolefinen transparente, farblose Mischungen ergeben.

## Patentansprüche

1. Polymergemisch mit verbessertem Relaxations- und Schrumpfverhalten enthaltend mindestens ein Cycloolefinpolymer und mindestens ein amorphes Cycloolefinpolymer, wobei die im Polymergemisch enthaltenen Cycloolefinpolymere 0,1 bis 99,9 Gew.-%, bezogen auf die Gesamtmasse des jeweiligen Cycloolefinpolymers, polymerisierte Einheiten enthalten, welche sich ableiten von mindestens einem polycyclischen Olefin der Formeln I, II, II', III, IV, V oder VI 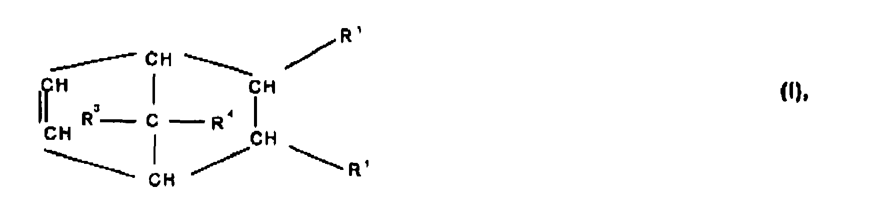 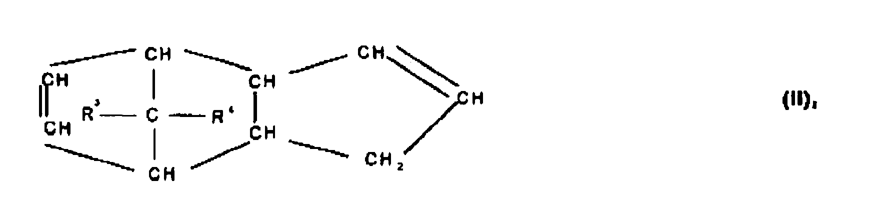 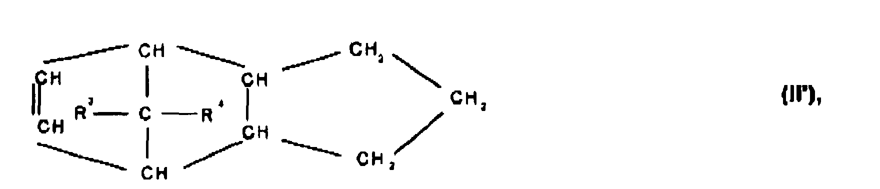 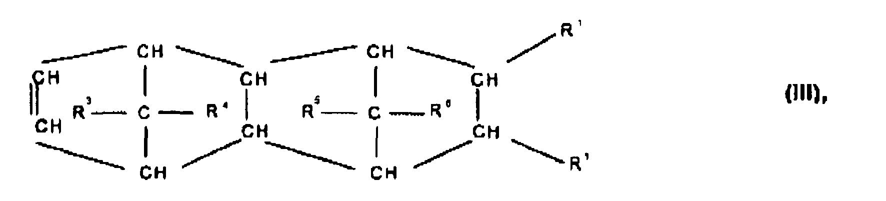 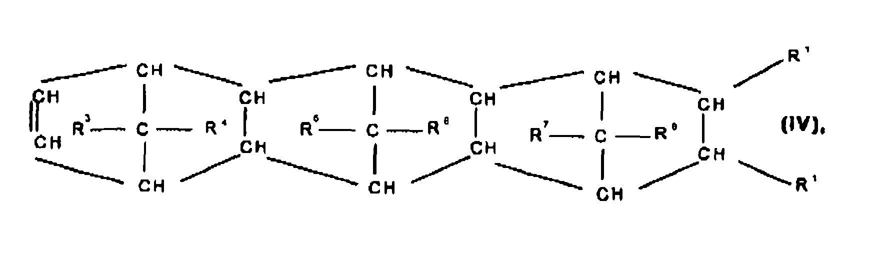 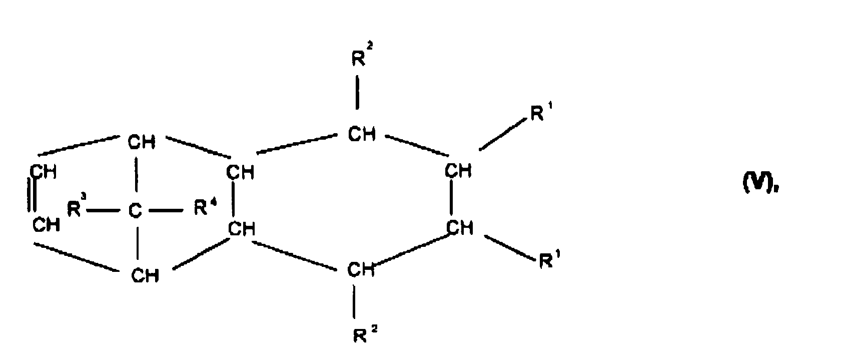 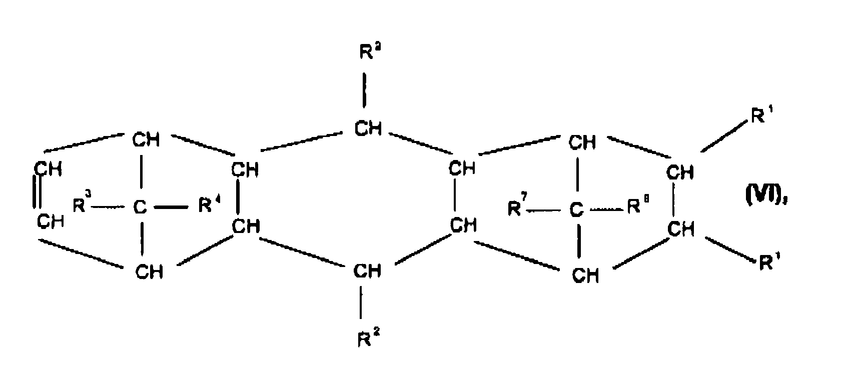 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest, einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0,1 bis 99,9 Gew.-%, bezogen auf die Gesamtmasse des Cycloolefincopolymers, polymerisierte Einheiten, welche sich ableiten von einem oder mehreren acyclischen Olefinen der Formel VII 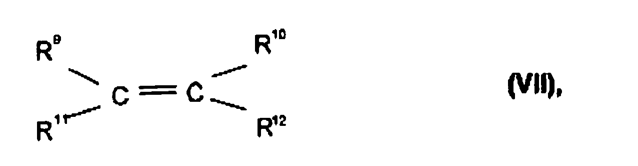 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₆-Arylrest bedeuten, wobei die im Polymergemisch enthaltenen Cycloolefinpolymere eine Glasumwandlungstemperatur zwischen 50 und 250 °C aufweisen, und wobei nach Zugabe des amorphen Cycloolefinpolymers zum Cycloolefinpolymer im Glasübergangsbereich, bestimmbar mit DSC-Messung (DIN EN ISO 11357-1), ein leichterer Abfall des Elastizitätsmoduls mit der Temperatur, bestimmbar mit einem Torsionspendel bei einer Frequenz von 5 Hz und einer Heizrate von 5°C/min an Probenkörpern der Abmessungen 50*10*1 mm, gegenüber dem Cycloolefinpolymer erzielt wird.

2. Verwendung eines Polymergemischs nach Anspruch 1 zur Herstellung von mono- oder biaxial orientierten Folien, Blisterverpackungen, Filmen, Gemischen mit anderen Kunststoffen, besonders Polyolefinen.

3. Verwendung eines Polymergemischs nach Anspruch 1 beim Spritzguss, Spritzblasen und Blasextrusion.

## Claims

1. A polymer mixture with improved relaxation behavior and improved shrinkage behavior, comprising at least one cycloolefin polymer and at least one amorphous cycloolefin polymer, where the cycloolefin polymers present in the polymer mixture contain from 0.1 to 99.9% by weight, based on the total weight of the respective cycloolefin polymer, of polymerized units which derive from at least one polycyclic olefin of the formulae I, II, II', III, IV, V, or VI 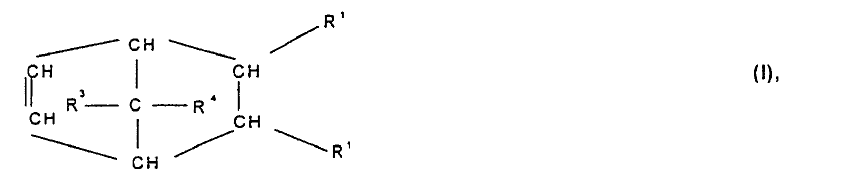 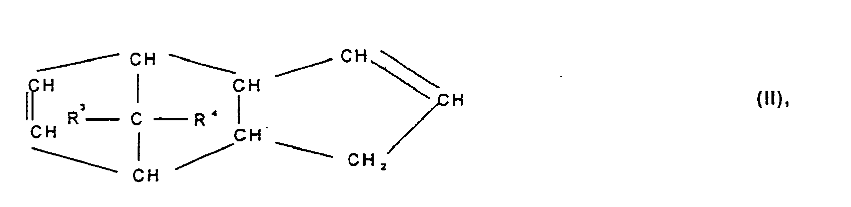 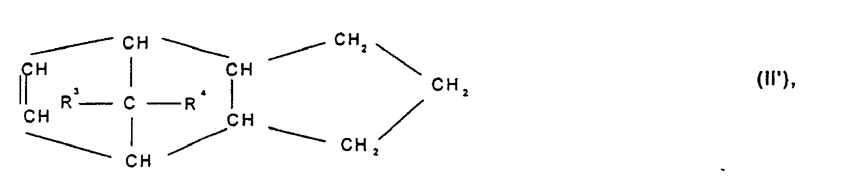 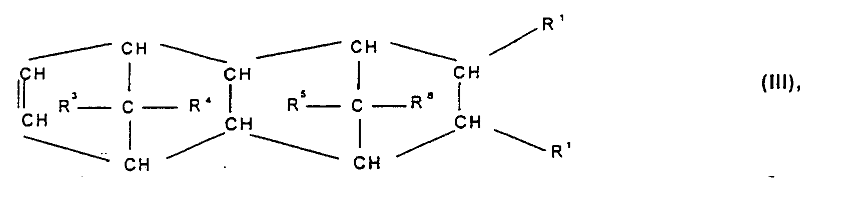 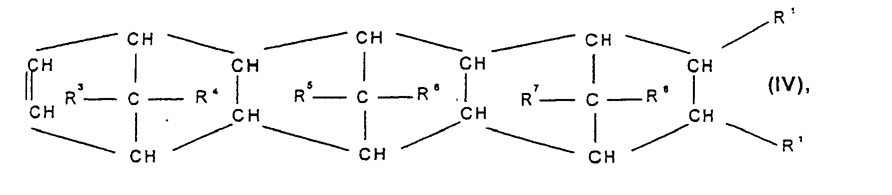 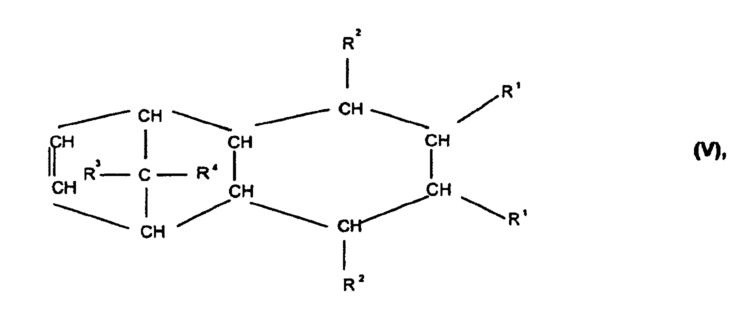 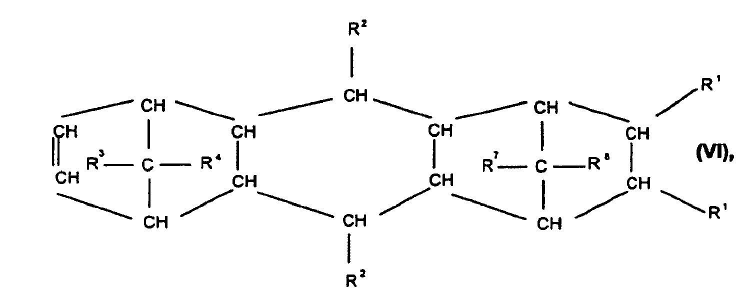 where R¹, R², R³, R⁴, R⁵, R⁶, R⁷, and R⁸ are identical or different and are a hydrogen atom or a C₁-C₂₀-hydrocarbon radical, such as a linear or branched C₁-C₈-alkyl radical, C₆-C₁₈-aryl radical, C₇-C₂₀-alkylenearyl radical, or a cyclic or acyclic C₂-C₂₀-alkenyl radical, or form a saturated, unsaturated, or aromatic ring, where the same radicals R¹ to R⁸ in the various formulae I to VI may have a different meaning, and where n can assume values from 0 to 5, and containing from 0.1 to 99.9% by weight, based on the total weight of the cycloolefin copolymer, of polymerized units which derive from one or more acyclic olefins of the formula VII 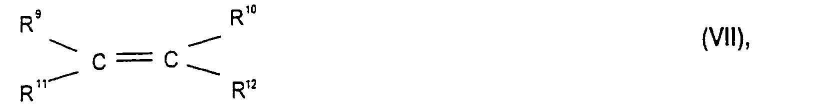 where R⁹, R¹⁰, R¹¹, and R¹² are identical or different and are a hydrogen atom, or a linear or branched, saturated or unsaturated C₁-C₂₀-hydrocarbon radical, such as a C₁-C₈-alkyl radical or a C₆-C₁₈-aryl radical, where the glass transition temperature of the cycloolefin polymers present in the polymer mixture is from -50 to 250°C, and where, after addition of the amorphous cycloolefin polymer to the cycloolefin polymer, within the glass transition range, determinable by DSC measurement (DIN EN ISO 11357-1), the temperature-related reduction of modulus of elasticity achieved, determinable using a torsion pendulum with a frequency of 5Hz and a heating rate of 5°C/min, on specimens of dimensions 50*10*1 mm, is less severe than for the cycloolefin polymer.

2. The use of a polymer mixture as claimed in claim 1 for producing mono- or biaxially oriented foils, blister packs, films, or mixtures with other plastics, particularly with polyolefins.

3. The use of a polymer mixture as claimed in claim 1 in injection molding, injection blow molding, or blow extrusion.

## Revendications

1. Mélange de copolymères présentant un comportement amélioré à la relaxation et au retrécissement comprenant au moins un polymère cyclo-oléfinique et au moins un polymère cyclo-oléfinique amorphe, dans lequel les polymères cyclo-oléfiniques contenus dans le mélange de copolymères comprennent de 0,1 à 99,9 % en poids, exprimés par rapport à la masse totale des polymère cyclo-oléfiniques présents, d'unités polymérisées, qui se distinguent par au moins une des oléfines polycycliques présentant les formules I, II, II', III, IV, V ou VI ci-dessous 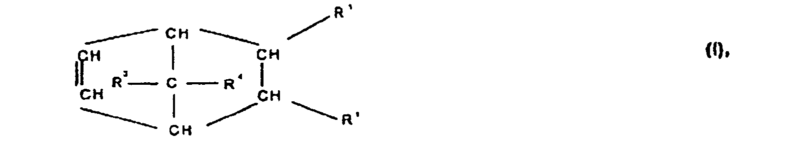 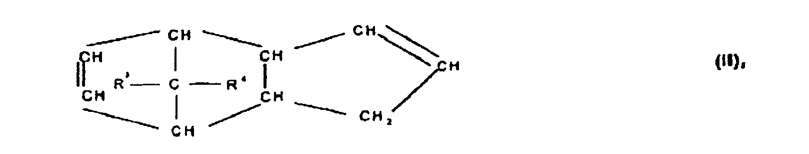 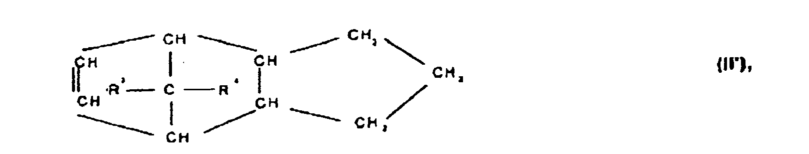 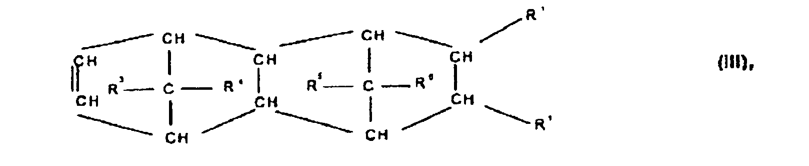 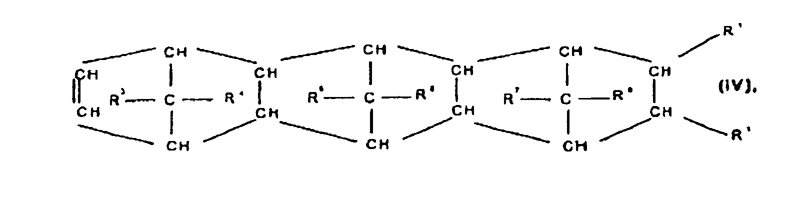 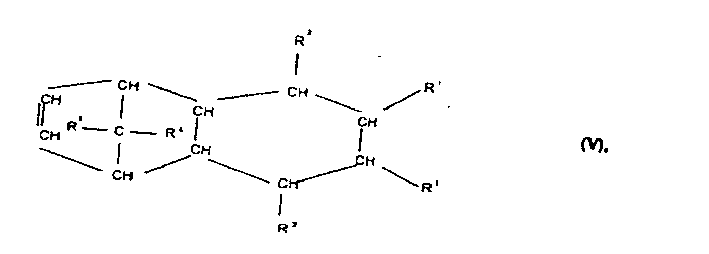 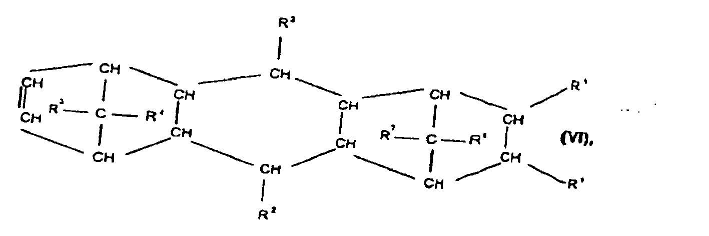 formules dans lesquelles
- R¹, R², R³, R⁴, R⁵, R⁶, R⁷ et R⁸, sont identiques ou différents et consistent en un atome d'hydrogène ou en un résidu hydrocarboné en C₁-C₂₀, tels que des résidus linéaires ou ramifiés C₁-C₈-alkyl, C₆-C₁₈-aryl, C₇-C₂₀-alkylénaryl, C₂-C₂₀-alkényl cyclique ou acyclique, ou forment un noyau saturé, insaturé ou aromatique, dans lesquels des résidus R¹ à R⁸ semblables peuvent avoir des significations différentes dans les différentes formules I à VI,
- n peut présenter une valeur de 0 à 5, et qui comprend de 0,1 à 99,9 % en poids, exprimés par rapport à la masse totale des polymères cyclo-oléfiniques présents, d'unités polymérisées qui se distinguent par une ou plusieurs oléfines alicycliques de formule VII ci-dessous: 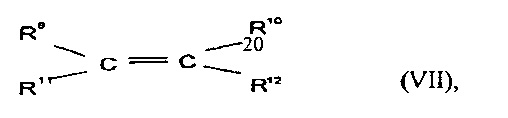
dans laquelle R⁹, R¹⁰, R¹¹ et R¹², sont identiques ou différents et consistent en un atome d'hydrogène ou en un résidu hydrocarboné en C₁-C₂₀ linéaire, ramifié, saturé ou insaturé, tel que un résidu C₁-C₈-alkyl ou C₆-C₁₈-aryl, dans lequel les polymères cyclo-oléfiniques contenus dans le mélange de copolymères présentent une température de transition vitreuse comprise entre -50 et 250°C, et dans lequel après addition des polymères cyclo-oléfiniques amorphes au polymère cyclo-oléfinique on obtient dans le domaine du transfert vitreux, déterminable par détermination DSC (selon la norme DIN EN ISO 11357-1), une légère chute du module d'élasticité avec la température, déterminée avec un pendule de torsion à une fréquence de 5 Hz et une vitesse de chauffage de 5°C/min pour des éprouvettes dont la dimension est de 50x10x1 mm, par rapport au polymère cyclo-oléfinique.

2. Application d'un mélange de copolymères selon la revendication 1, pour la fabrication de feuilles mono-orientées ou à biaxialement orientées, d'emballages-coques ou blisters, de films, de mélanges avec d'autres matières plastiques, notamment des polyoléfines.

3. Application d'un mélange de copolymères selon la revendication 1, par moulage par injection, moulage par soufflage et extrusion par soufflage.
